# EUROPEAN PATENT APPLICATION

(11) **EP 3 554 035 A1**
(43) Date of publication of application: **16.10.2019**
(21) Application number: 17878276.9
(22) Date of filing: 24.10.2017
(51) Int. Cl.: H04L 29/06

(54) **METHOD AND DEVICE FOR COMMUNICATIONS BASED ON INTEGRATING DEVICE, AND STORAGE MEDIUM**

(30) Priority: 09.12.2016 CN 201611131068
(71) Applicant: ZTE Corporation, Shenzhen, Guangdong 518057 (CN)
(72) Inventor: GAO, Yang, Shenzhen Guangdong 51805 (CN); CAI, Kai, Shenzhen Guangdong 51805 (CN)
(74) Representative: Petraz, Gilberto Luigi
(86) International application number: PCT/CN2017/107504
(87) International publication number: WO 2018/103464

(57) **Abstract**

Provided in the embodiments are a method and a device for communications based on an integrating device, and a storage medium. The method includes: receiving, by an integrating device, a temporary pairing code sent by a pairing server, the temporary pairing code being used for pairing a first terminal with the pairing server; and receiving, by the integrating device, pairing information of the first terminal returned by the pairing server.

## Description

### Cross-reference to Related Applications

This application is based on, and claims the priority of, the Chinese patent application CN 201611131068.9 filed on December 9, 2016, the entirety of which is incorporated herein by reference.

### Field of the Invention

The present disclosure relates to the technical field of mobile communications, and in particular, to a method and a device for communications based on an integrating device, and a storage medium.

### Background of the Invention

With the popularity of video services, end users desire to switch video calls to large screen devices (e.g., TV+ set-top boxes) for a better video experience. This service experience is commonly referred to as a screen-throwing service in the industry.

The screen-throwing service may be implemented using a call transfer service, but this practice will switch the entire call (for example, including multimedia information, signaling information, etc.) to the set-top box, while users will be limited in operating pictures, texts, red envelopes grabbing, etc. on the set-top box, and the experience is not good. Moreover, the related operations of the transfer services further require that the set-top box support the registration of the IP Multimedia Subsystem (IMS), and the registration number management and the like are also cumbersome for users. In addition, in the traditional application scenarios, there may be a situation where some set-top boxes cannot support near-field communication, and the screen-throwing service cannot be realized.

### Summary of the Invention

In order to solve the existing technical problem, the embodiments of the present disclosure provide a method and a device for communications based on an integrating device, and a storage medium.

The technical solutions of the embodiments of the present disclosure are implemented as follows.

The embodiments of the present disclosure provide a method for communications based on an integrating device, including:
receiving, by the integrating device, a temporary pairing code sent by a pairing server, the temporary pairing code being used for pairing a first terminal with the pairing server; and
receiving, by the integrating device, pairing information of the first terminal returned by the pairing server.

The embodiments of the present disclosure further provide a method for communications based on an integrating device, including:
sending, by a pairing server, a temporary pairing code to the integrating device, after the pairing server receives a first pairing request sent by the integrating device after the integrating device is triggered, the temporary pairing code being used for pairing a first terminal with the pairing server; and
sending, by the pairing server, pairing information of the first terminal to the integrating device, and sending, by the pairing server, pairing information of the integrating device to the first terminal.

The embodiments of the present disclosure provide a method for communications based on an integrating device, including:
performing, by a first terminal, a signaling interaction with a second terminal after the first terminal completes pairing with the integrating device;
sending, by the first terminal, a session description protocol SDP request message to the integrating device, and receiving, by the first terminal, an SDP of the first terminal returned by the integrating device;
generating, by the first terminal, a new SDP based on the received SDP, and notifying, by the first terminal, according to a current service state, the second terminal of the new SDP through an update message corresponding to the service state;
requesting, by the first terminal, an SDP of the second terminal from the integrating device after the first terminal receives a response message from the second terminal, and receiving, by the first terminal, the SDP of the second terminal returned by the integrating device; and
performing, by the first terminal, an interaction of the SDP of the second terminal with the second terminal, to establish an audio channel and a video channel of the first terminal between the second terminal and the integrating device.

The embodiments of the present disclosure further provide a method for communications based on an integrating device, including:
completing, by the integrating device, pairing of the integrating device with a first terminal;
receiving, by the integrating device, a session description protocol SDP request message sent by the first terminal, after the first terminal and a second terminal complete a signaling interaction;
returning, by the integrating device, an SDP of the first terminal to the first terminal, for the first terminal to generate a new SDP based on the received SDP;
receiving, by the integrating device, a message sent by the first terminal requesting an SDP of the second terminal, after the first terminal notifies the second terminal of the new SDP through an update message corresponding to a current service state; and
returning, by the integrating device, the SDP of the second terminal to the first terminal, for the first terminal to perform an interaction of the SDP of the second terminal with the second terminal, so as to establish an audio channel and a video channel of the first terminal between the second terminal and the integrating device.

The embodiments of the present disclosure provide an integrating device, including:
a first receiving unit, configured to
receive a temporary pairing code sent by a pairing server, the temporary pairing code being used for pairing a first terminal with the pairing server; and
receive pairing information of the first terminal returned by the pairing server.

The embodiments of the present disclosure further provide an application server, including:
a second receiving unit; and
a second sending unit, configured to
send, after the second receiving unit receives a first pairing request sent by an integrating device after the integrating device is triggered, a temporary pairing code to the integrating device, the temporary pairing code being used for pairing a first terminal with the pairing server; and
send pairing information of the first terminal to the integrating device, and sending pairing information of the integrating device to the first terminal.

The embodiments of the present disclosure provide a communication terminal based on an integrating device, including:
a communication unit, configured to perform a signaling interaction with a second terminal after completing pairing with the integrating device; to send a session description protocol SDP request message to the integrating device, and receive an SDP of the terminal returned by the integrating device; and to notify, according to a current service state, the second terminal of a new SDP forwarded by a processing unit through an update message corresponding to the service state; configured to request, after receiving a response message from the second terminal, an SDP of the second terminal from the integrating device, and receive the SDP of the second terminal returned by the integrating device; and configured to perform an interaction of the SDP of the second terminal with the second terminal, and establish an audio channel and a video channel of the terminal between the second terminal and the integrating device; and
a processing unit, configured to generate a new SDP based on the received SDP and forward the new SDP to the communication unit.

The embodiments of the present disclosure further provide an integrating device, including:
a third sending unit, configured to return, after the integrating device completes pairing with a first terminal, an SDP of the first terminal to the first terminal, for the first terminal to generate a new SDP based on the received SDP; and further configured to return an SDP of the second terminal to the first terminal, for the first terminal to perform an interaction of the SDP of the second terminal with the second terminal, so as to establish an audio channel and a video channel of the first terminal between the second terminal and the integrating device; and
a third receiving unit, configured to receive, after the integrating device completes pairing with the first terminal, an SDP request message sent by the first terminal after the first terminal and the second terminal complete a signaling interaction; and further configured to receive, after the first terminal notifies the second terminal of the new SDP through an update message corresponding to a current service state, a message sent by the first terminal requesting the SDP of the second terminal.

The embodiments of the present disclosure further provide a storage medium, having stored thereon a computer program. When being executed by a processor, the computer program implements steps of any method on the above integrating device side, or implements steps of any method on the above pairing server side, or implements steps of any method on the above first terminal side.

Embodiments of the present disclose provide a method and a device for communications based on an integrating device, and a storage medium. The method includes: receiving, by an integrating device, a temporary pairing code sent by a pairing server, the temporary pairing code being used for pairing a first terminal with the pairing server; and receiving, by the integrating device, pairing information of the first terminal returned by the pairing server, and completing, by the integrating device, a process of being paired with the first terminal after the pairing server sends the paring information of the integrating device to the first terminal. The embodiments of the present disclosure are not limited by near field communication, and the pairing process of the integrating device and the terminal can be completed based on the pairing server, so that the subsequent screen-throwing service can be carried out.

In addition, the embodiments of the present disclosure can implement the screen-throwing service based on the integrating device technology. The user can switch the IMS video call to the integrating device, and other non-multimedia services, such as pictures, texts, red envelopes grabbing, etc. still remain on the terminal side for processing, and the user experience is thus greatly improved. Moreover, the user number management is simple, and one terminal (mobile phone) number manages all call services, which has a great promotion effect on the popularization of IMS video calls.

### Brief Description of the Drawings

Fig. 1 is a schematic flowchart of implementing an integrating device technology in related art;
Fig. 2 is a schematic flowchart 1 of a method for communications based on an integrating device according to an embodiment of the present disclosure;
Fig. 3 is a schematic flowchart 2 of a method for communications based on an integrating device according to an embodiment of the present disclosure;
Fig. 4 is a schematic flowchart 3 of a method for communications based on an integrating device according to an embodiment of the present disclosure;
Fig. 5 is a schematic flowchart 4 of a method for communications based on an integrating device according to an embodiment of the present disclosure;
Fig. 6 is a structural schematic diagram 1 of an integrating device according to an embodiment of the present disclosure;
Fig. 7 is a structural schematic diagram of an application server according to an embodiment of the present disclosure;
Fig. 8 is a structural schematic diagram of a communication terminal based on an integrating device according to an embodiment of the present disclosure;
Fig. 9 is a structural schematic diagram 2 of an integrating device according to an embodiment of the present disclosure;
Fig. 10 is a schematic flowchart diagram of a ringing state screen-throwing service according to Embodiment One of the present disclosure;
Fig. 11 is a schematic flowchart of a call state screen-throwing service according to Embodiment Two of the present disclosure;
Fig. 12 is a schematic flowchart of a screen-throwing service of a camera device compatible with a camera device that does not support a microphone, according to Embodiment Three of the present disclosure;
Fig. 13 is a schematic flowchart of pairing using a pairing server according to Embodiment Four of the present disclosure; and
Fig. 14 is a schematic flowchart of automatic pairing using a pairing server according to Embodiment Five of the present disclosure.

### Detailed Description of the Embodiments

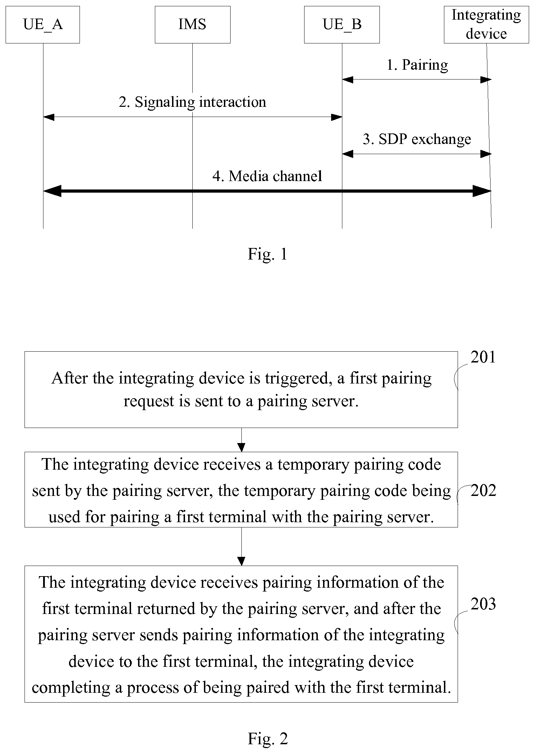

In order to facilitate understanding of the integrating device technology, firstly, the traditional integrating device technology is briefly described, and as shown in Fig. 1, the technology includes the following implementation procedures.

In Step 1, UE_B is paired with the integrating device.

In Step 2, UE_A performs a signaling interaction with UE_B.

In Step 3, UE_B exchanges SDP with the integrating device.

In Step 4, a media channel is established between the UE_A and the integrating device.

The embodiments of the present disclosure provide a method for communications based on an integrating device, and as shown in Fig. 2, the method comprises the following steps.

In Step 201, after the integrating device is triggered, a first pairing request is sent to a pairing server.

In Step 202, the integrating device receives a temporary pairing code sent by the pairing server, the temporary pairing code being used for pairing a first terminal with the pairing server.

In Step 203, the integrating device receives pairing information of the first terminal returned by the pairing server, and after the pairing server sends pairing information of the integrating device to the first terminal, the integrating device completing a process of being paired with the first terminal.

Here, the first pairing request is used to request a temporary pairing code.

The embodiments of the present disclosure are not limited by near field communication, and the process of pairing the integrating device and the terminal can be completed based on the pairing server, so that a subsequent screen-throwing service can be carried out.

In one embodiment, after the integrating device completes a process of being paired with the first terminal, the method further comprises:
sending a second pairing request, by the integrating device, to the pairing server, the second pairing request being used to request a fixed pairing code; and
receiving, by the integrating device ,the fixed pairing code sent by the pairing server, after the pairing server interacts with the first terminal and stores the fixed pairing code.

In another embodiment, after the integrating device receives the fixed pairing code sent by the pairing server, and when the pairing of the integrating device with the first terminal is currently in a release state, the method further comprises:
receiving, by the integrating device, a third pairing request sent by the pairing server, the third pairing request being sent after the pairing server receives a pairing request sent by the first terminal based on the fixed pairing code, for requesting a pairing operation based on the fixed pairing code; and
returning, by the integrating device, a confirmation message carrying information of the integrating device to the pairing server, so that the pairing server sends a pairing confirmation message to the first terminal to complete a pairing process between the integrating device and the first terminal.

It can be seen that, based on the fixed pairing code and the pairing server, the integrating device can perform an automatic pairing process with the terminal, without human participation, and the user experience is improved.

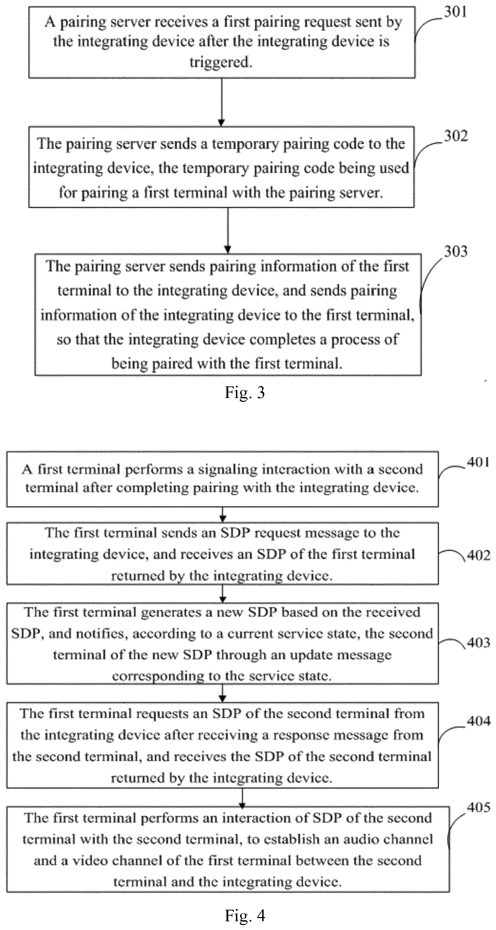

Embodiments of the present disclosure further provide a method for communications based on an integrating device, and as shown in Fig. 3, the method comprises the following steps.

In Step 301, a pairing server receives a first pairing request sent by the integrating device after the integrating device is triggered.

In Step 302, the pairing server sends a temporary pairing code to the integrating device, the temporary pairing code being used for pairing a first terminal with the pairing server.

In Step 303, the pairing server sends pairing information of the first terminal to the integrating device, and sends pairing information of the integrating device to the first terminal, so that the integrating device completes a process of being paired with the first terminal.

Here, the first pairing request is used to request a temporary pairing code.

The embodiments of the present disclosure are not limited by near field communication; the integrating device does not need IMS registration; and the pairing process of the integrating device and the terminal can be completed based on the pairing server, so that the subsequent screen-throwing service can be carried out.

In one embodiment, after the integrating device completes a process of being paired with the first terminal, the method further comprises:
receiving, by the pairing server, a second pairing request sent by the integrating device, the second pairing request being used for requesting a fixed pairing code; and
enabling the pairing server to interact with the first terminal and store the fixed pairing code, and sending the fixed pairing code to the integrating device.

In another embodiment, after the pairing server sends the fixed pairing code to the integrating device, and when the pairing of the integrating device with the first terminal is currently in a release state, the method further comprises:
receiving, by the pairing server, a pairing request based on the fixed pairing code, sent by the first terminal;
sending, by the pairing server, a third pairing request to the integrating device, the third pairing request being used for requesting a pairing operation based on the fixed pairing code; and
receiving, by the pairing server, a confirmation message returned by the integrating device and carrying information of the integrating device, and then sending, by the pairing server, a pairing confirmation message to the first terminal to complete a pairing process between the integrating device and the first terminal.

It can be seen that, based on the fixed pairing code and the pairing server, the integrating device can perform an automatic pairing process with the terminal, without human participation, and the user experience is improved.

Embodiments of the present disclosure further provide a method for communications based on an integrating device, and as shown in Fig. 4, the method comprises the following steps.

In Step 401, a first terminal performs a signaling interaction with a second terminal after completing pairing with the integrating device.

In Step 402, the first terminal sends an SDP request message to the integrating device, and receives an SDP of the first terminal returned by the integrating device.

In Step 403, the first terminal generates a new SDP based on the received SDP, and notifies, according to a current service state, the second terminal of the new SDP through an update message corresponding to the service state.

In Step 404, the first terminal requests an SDP of the second terminal from the integrating device after receiving a response message from the second terminal, and receives the SDP of the second terminal returned by the integrating device.

In Step 405, the first terminal performs an interaction of SDP of the second terminal with the second terminal, to establish an audio channel and a video channel of the first terminal between the second terminal and the integrating device.

Here, the screen-throwing service of the first terminal is in an available state. The service state can include: a ringing state screen-throwing service, a call state screen-throwing service, and the like. If the SDP of the first terminal returned by the integrating device does not carry audio description information, the new SDP generated by the first terminal comprises audio description information.

The embodiments of the present disclosure can implement the screen-throwing service based on the integrating device technology. The user can switch the IMS video call to the integrating device, and other non-multimedia services, such as pictures, texts, red envelopes grabbing, etc. still remain on the terminal side for processing, and the user experience is thus greatly improved. Moreover, the user number management is simple, and one terminal (mobile phone) number manages all call services, which has a great promotion effect on the popularization of IMS video calls.

Where, when the current service state is a ringing state screen-throwing service, the update message is an UPDATE message;
when the current service state is a call state screen-throwing service, the update message is a Re-INVITE message.

In one embodiment, before the first terminal performs a signaling interaction with the second terminal, the method further comprises:
sending, by the first terminal, a capability query message to the integrating device;
receiving a response message returned by the integrating device, the response message indicating that the integrating device only supports a video call; and correspondingly, and
establishing, by the first terminal, a video channel of the first terminal between the second terminal and the integrating device, and establishing, by the first terminal, an audio channel of the first terminal between the first terminal and the second terminal.

It can be seen that the embodiments of the present disclosure are also applicable to an integrating device that does not support a microphone.

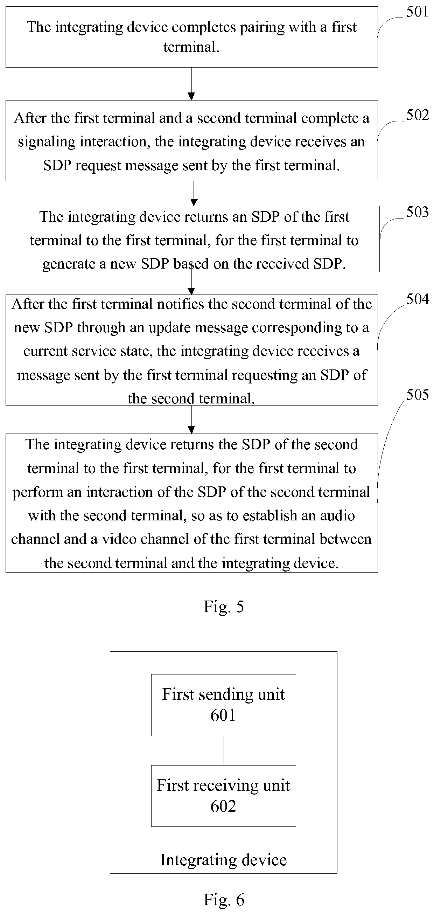

The embodiments of the present disclosure further provide a method for communications based on an integrating device, and as shown in Fig. 5, the method comprises the following steps.

In Step 501, the integrating device completes pairing with a first terminal.

In Step 502, after the first terminal and a second terminal complete a signaling interaction, the integrating device receives an SDP request message sent by the first terminal.

In Step 503, the integrating device returns an SDP of the first terminal to the first terminal, for the first terminal to generate a new SDP based on the received SDP.

In Step 504, after the first terminal notifies the second terminal of the new SDP through an update message corresponding to a current service state, the integrating device receives a message sent by the first terminal requesting an SDP of the second terminal.

In Step 505, the integrating device returns the SDP of the second terminal to the first terminal, for the first terminal to perform an interaction of the SDP of the second terminal with the second terminal, so as to establish an audio channel and a video channel of the first terminal between the second terminal and the integrating device.

Here, the screen-throwing service of the first terminal is in an available state; the service state can include: a ringing state screen-throwing service, a call state screen-throwing service, and the like.

The embodiments of the present disclosure can implement the screen-throwing service based on the integrating device technology. The user can switch the IMS video call to the integrating device, and other non-multimedia services, such as pictures, texts, red envelopes grabbing, etc. still remain on the terminal side for processing, and the user experience is thus greatly improved. Moreover, the user number management is simple, and one terminal (mobile phone) number manages all call services, which has a great promotion effect on the popularization of IMS video calls.

In one embodiment, before the first terminal and the second terminal complete the signaling interaction, the method further comprises:
receiving, by the integrating device, a capability query message sent by the first terminal, and returning, by the integrating device, a response message to the first terminal, the response message indicating that the integrating device supports only a video call; and correspondingly,
establishing a video channel of the first terminal between the second terminal and the integrating device, and establishing an audio channel of the first terminal between the first terminal and the second terminal.

The embodiments of the present disclosure further provide a device for implementing the embodiments and the preferred modes of implementation, and what has been explained will not be detailed here. As used below, the term "unit" may implement a combination of software and/or hardware of a predetermined function. Although the device described in the following embodiments is preferably implemented in software, the implementation of hardware, or a combination of software and hardware is also possible and conceivable.

The embodiments of the present disclosure further provide an integrating device, and as shown in Fig. 6, the integrating device comprises:
a first sending unit 601, configured to send a first pairing request to the pairing server after the integrating device is triggered; and
a first receiving unit 602, configured to receive a temporary pairing code sent by the pairing server, the temporary pairing code being used for pairing a first terminal with the pairing server, and receive pairing information of the first terminal returned by the pairing server, and complete a process of being paired with the first terminal after the pairing server sends pairing information of the integrating device to the first terminal.

Here, the first pairing request is used to request the temporary pairing code.

The embodiments of the present disclosure are not limited by near field communication, and the pairing process of the integrating device and the terminal can be completed based on the pairing server, so that the subsequent screen-throwing service can be carried out.

In one embodiment, after the first receiving unit 602 completes a process of being paired with the first terminal,
the first sending unit 601 is further configured to send, after the pairing server sends the pairing information of the integrating device to the first terminal, and the integrating device completes a process of being paired with the first terminal, a second pairing request to the pairing server, the second pairing request being used to request a fixed pairing code;
the first receiving unit 602 is further configured to receive, after the pairing server interacts with the first terminal and stores the fixed pairing code, the fixed pairing code sent by the pairing server.

In another embodiment, after the first receiving unit 602 receives the fixed pairing code sent by the pairing server, and when the pairing of the integrating device with the first terminal is currently in a release state,
the first receiving unit 602 is further configured to receive a third pairing request sent by the pairing server, the third pairing request being sent after the pairing server receives a pairing request based on the fixed pairing code, sent by the first terminal, and configured to request a pairing operation based on the fixed pairing code;
the first sending unit 601 is further configured to return a confirmation message carrying information of the integrating device to the pairing server, so that the pairing server sends a pairing confirmation message to the first terminal to complete a pairing process between the integrating device and the first terminal.

It can be seen that, based on the fixed pairing code and the pairing server, the integrating device can perform an automatic pairing process with the terminal, without human participation, and the user experience is improved.

In practical application, the first sending unit 601 and the first receiving unit 602 may be implemented by a processor in an integrating device in combination with a communication interface.

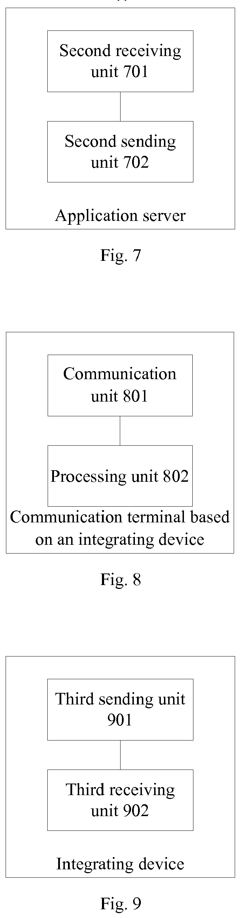

The embodiments of the present disclosure further provide an application server, and as shown in Fig. 7, the application server comprises:
a second receiving unit 701, configured to receive a first pairing request sent by an integrating device after the integrating device is triggered; and
a second sending unit 702, configured to send a temporary pairing code to the integrating device, the temporary pairing code being used for pairing a first terminal with the pairing server, and send pairing information of the first terminal to the integrating device, and sending pairing information of the integrating device to the first terminal, so that the integrating device completes a process of being paired with the first terminal.

Here, the first pairing request is used to request the temporary pairing code.

The embodiments of the present disclosure are not limited by near field communication; the integrating device does not need an IMS registration; and the pairing process of the integrating device and the terminal can be completed based on the pairing server, so that the subsequent screen-throwing service can be carried out.

In one embodiment, the second receiving unit 701 is further configured to receive, after the integrating device completes a process of being paired with the first terminal, a second pairing request sent by the integrating device, the second pairing request being used for requesting a fixed pairing code;
the second sending unit 702 is further configured to interact with the first terminal and store the fixed pairing code, and to send the fixed pairing code to the integrating device.

In another embodiment, after the second sending unit 702 sends the fixed pairing code to the integrating device, and when the pairing of the integrating device with the first terminal is currently in a release state,
the second receiving unit 701 is further configured to receive a pairing request based on the fixed pairing code, sent by the first terminal, to receive a confirmation message returned by the integrating device and carrying information of the integrating device, and then to send a pairing confirmation message to the first terminal to complete a pairing process between the integrating device and the first terminal;
the second sending unit 702 is further configured to send a third pairing request to the integrating device, the third pairing request being used for requesting a pairing operation based on the fixed pairing code.

It can be seen that, based on the fixed pairing code and the pairing server, the integrating device can perform an automatic pairing process with the terminal, without human participation, and the user experience is improved.

In practical application, the second receiving unit 701 and the second sending unit 702 may be implemented by a processor in an application server in combination with a communication interface.

The embodiments of the present disclosure further provide a communication terminal based on an integrating device, and as shown in Fig. 8, the terminal comprises:
a communication unit 801, configured to perform a signaling interaction with a second terminal after completing pairing with the integrating device; to send an SDP request message to the integrating device, and receive an SDP of the terminal returned by the integrating device; and to notify, according to a current service state, the second terminal of a new SDP forwarded by a processing unit through an update message corresponding to the service state; configured to request, after receiving a response message from the second terminal, an SDP of the second terminal from the integrating device, and receive the SDP of the second terminal returned by the integrating device; and configured to perform an interaction of the SDP of the second terminal between the terminal and the second terminal, and establish an audio channel and a video channel of the terminal between the second terminal and the integrating device; and
a processing unit 802, configured to generate a new SDP based on the received SDP and forward the new SDP to the communication unit.

In one embodiment, the communication unit 801 is further configured to send, before performing a signaling interaction with the second terminal, a capability query message to the integrating device, and to receive a response message returned by the integrating device, the response message indicating that the integrating device only supports a video call; and correspondingly,
the communication unit 801 is further configured to establish a video channel of the terminal between the second terminal and the integrating device, and establish an audio channel of the terminal between the terminal and the second terminal.

In practical application, the communication unit 801 may be implemented by a processor in the communication terminal in combination with a communication interface, and the processing unit 802 may be implemented by a processor in the communication terminal.

The embodiments of the present disclosure further provide an integrating device, and as shown in Fig. 9, the integrating device comprises:
a third sending unit 901, configured to return, after the integrating device completes pairing with a first terminal, an SDP of the first terminal to the first terminal, for the first terminal to generate a new SDP based on the received SDP; and further configured to return an SDP of the second terminal to the first terminal, for the first terminal to perform an interaction of the SDP of the second terminal with the second terminal, so as to establish an audio channel and a video channel of the first terminal between the second terminal and the integrating device; and
a third receiving unit 902, configured to receive, after the integrating device completes pairing with the first terminal, an SDP request message sent by the first terminal after the first terminal and the second terminal complete a signaling interaction; and further configured to receive, after the first terminal notifies the second terminal of the new SDP through an update message corresponding to a current service state, a message sent by the first terminal requesting the SDP of the second terminal.

In one embodiment, the third receiving unit 902 is further configured to receive, before the first terminal and the second terminal complete a signaling interaction, a capability query message sent by the first terminal, and return a response message to the first terminal, the response message indicating that the integrating device only supports a video call; and correspondingly,
a video channel of the first terminal is established between the second terminal and the integrating device, and an audio channel of the first terminal is established between the first terminal and the second terminal.

In practical application, the third sending unit 901 and the third receiving unit 902 may be implemented by a processor in an integrating device in combination with a communication interface.

The present disclosure will be described in detail below with reference to specific application scenario embodiments.

### Embodiment One

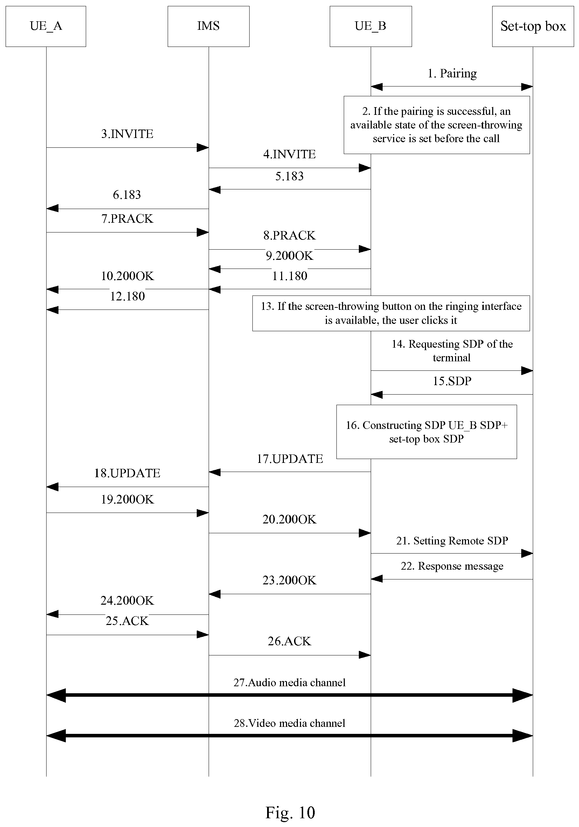

Fig. 10 is a schematic flowchart of ringing state screen-throwing service according to this embodiment, and the specific implementation process is as follows.
(1) UE_B is paired with a set top box;
(2) if UE_B is successfully paired, an available state of the screen-throwing service is set before the call;
(3) UE_A sends a video call to UE_B (SDP carrying audio and video media) and sends INVITE to IMS;
(4) IMS forwards the INVITE to UE_B;
(5) UE_B returns 183;
(6) IMS forwards 183;
(7) UE A sends PRACK;
(8) IMS forwards PRACK;
(9) UE_B returns 200 OK;
(10) IMS forwards 200 OK;
(11) UE_B returns 180;
(12) IMS forwards 180;
(13) if the screen-throwing button on UE_B ringing interface is available, the user clicks it;
(14) UE_B sends a message requesting SDP to the set top box;
(15) the set-top box returns SDP;
(16) UE_B constructs SDP (if UE_B has its own media stream, it is UE_B SDP+ set-top box SDP);
(17) UE_B sends UPDATE, carrying the constructed SDP;
(18) IMS forwards UPDATE;
(19) UE_A returns 200 OK;
(20) IMS forwards 200 OK;
(21) UE_B sends a message of setting remote SDP to the set top box;
(22) the set top box returns a response message;
(23) UE_B returns off-hook 200 OK;
(24) IMS forwards 200 OK;
(25) UE_A sends ACK;
(26) IMS forwards ACK;
(27) at this time, an audio channel of UE_B is established in the set top box;
(28) a video channel of UE_B is established in the set top box.

### Embodiment Two

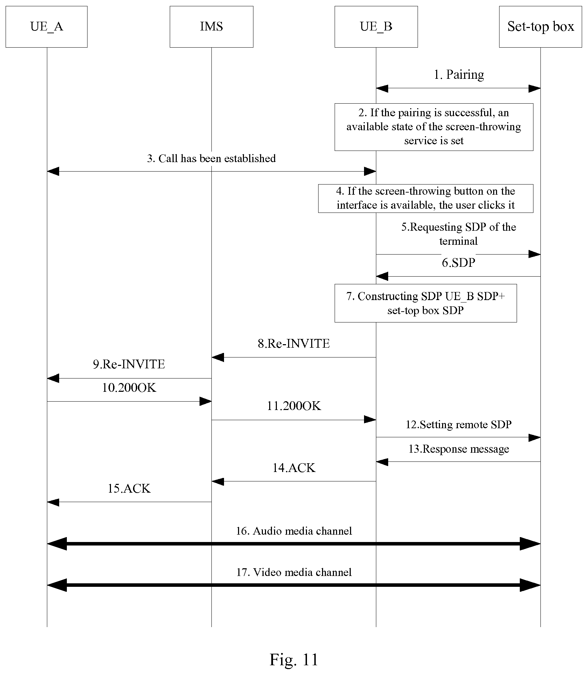

Fig. 11 is a schematic flowchart of call state screen-throwing service according to this embodiment, and the specific implementation process is as follows.
(1) UE_B is paired with a set top box;
(2) if UE_B is successfully paired, an available state of the screen-throwing service is set before the call;
(3) a call has been established between UE_A and UE_B;
(4) if the screen-throwing button on UE_B ringing interface is available, the user clicks it;
(5) UE_B sends a message requesting SDP to the set top box;
(6) the set-top box returns SDP
(7) UE_B constructs SDP (if UE_B has its own media stream, it is UE_B SDP+ set-top box SDP);
(8) UE_B sends Re-INVITE, carrying the constructed SDP;
(9) IMS forwards Re-INVITE;
(10) UE_A returns 200 OK;
(11) IMS forwards 200 OK;
(12) UE_B sends a message setting remote SDP to the set top box;
(13) the set-top box returns a response message;
(14) UE_B returns ACK;
(15) IMS forwards ACK;
(16) at this time, an audio channel of UE_B is established in the set top box;
(17) a video channel of UE_B is established in the set top box.

### Embodiment Three

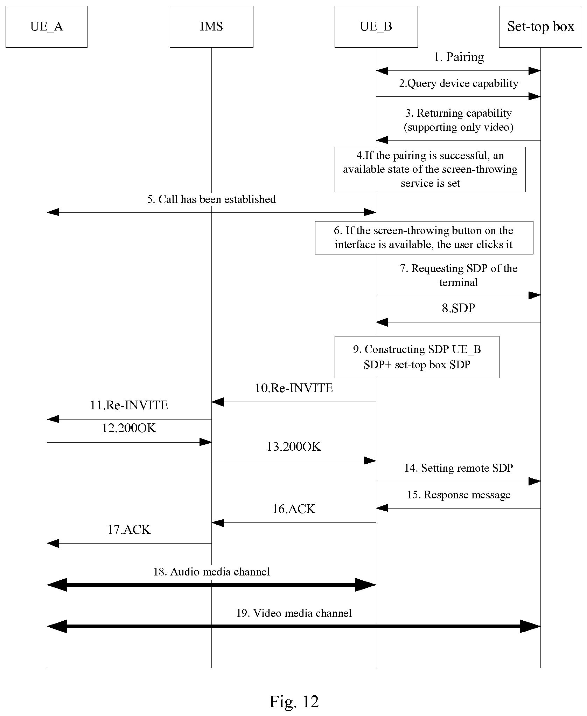

Fig. 12 is a schematic flowchart of screen-throwing service (taking a call state as an example) of a camera device compatible with a camera device that does not support a microphone, according to this embodiment, and the specific implementation process is as follows.
(1) UE_B is paired with a set top box;
(2) UE_B sends a capability query message to the set top box;
(3) the set-top box returns a response message, indicating that only video is supported;
(4) if UE_B is successfully paired, an available state of the screen-throwing service is set before the call;
(5) a call has been established between UE_A and UE_B;
(6) if the screen-throwing button on UE_B ringing interface is available, the user clicks it;
(7) UE_B sends a message requesting SDP to the set top box;
(8) the set-top box returns SDP;
(9) UE_B constructs SDP (if UE_B has its own media stream, it is UE_B SDP+ set-top box SDP);
(10) UE_B sends Re-INVITE, carrying the constructed SDP;
(11) IMS forwards Re-INVITE;
(12) UE_A returns 200 OK;
(13) IMS forwards 200 OK;
(14) UE_B sends a message of setting remote SDP to the set top box;
(15) the set-top box returns a response message;
(16) UE_B returns ACK;
(17) IMS forwards ACK;
(18) at this time, an audio channel of UE_B is established at UE_B;
(19) a video channel of UE_B is established in the set top box.

### Embodiment Four

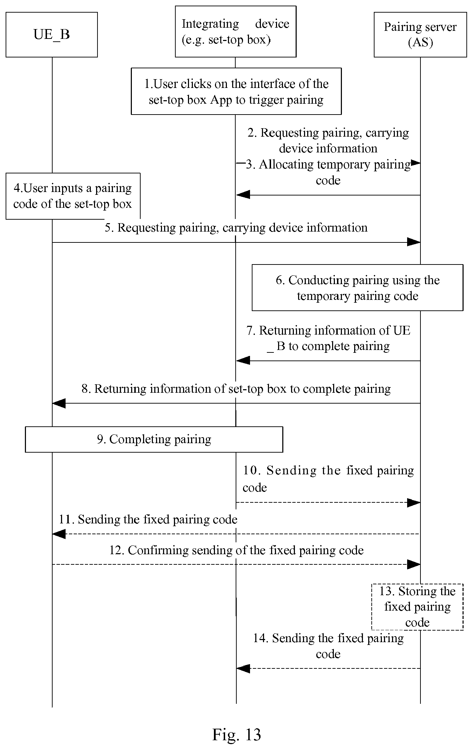

Fig. 13 is a schematic flowchart of pairing using a pairing server according to this embodiment, and the specific implementation process is as follows.
(1) user triggers the pairing from a set-top box (such as remote control operation);
(2) the set-top box sends a pairing request to a pairing server, carrying information of the set-top box;
(3) the server assigns a temporary pairing code (for example, a 6-8 bit random code, having timeliness) to the set-top box and presents it on the interface;
(4) user enters the pairing code presented by the set-top box into UE_B;
(5) UE_B sends a paring request to the server using the input pairing code;
(6) the server conducts the pairing based on the temporary pairing code;
(7) the server sends pairing information of UE_B to the set-top box to complete the pairing;
(8) the server sends pairing information of the set-top box to UE_B to complete the pairing;
(9) the pairing is completed as a whole;
(10) the set-top box sends a fixed pairing code request message in an already paired channel;
(11) the server forwards the fixed pairing code request message to UE_B;
(12) UE_B returns a confirmation message;
(13) the server saves the fixed pairing code and a pairing relationship;
(14) the server forwards the confirmation message.

Here, the steps (10)-(14) are optional procedures supporting the fixed pairing; and all of the set-top boxes can be more general integrating devices.

### Embodiment Five

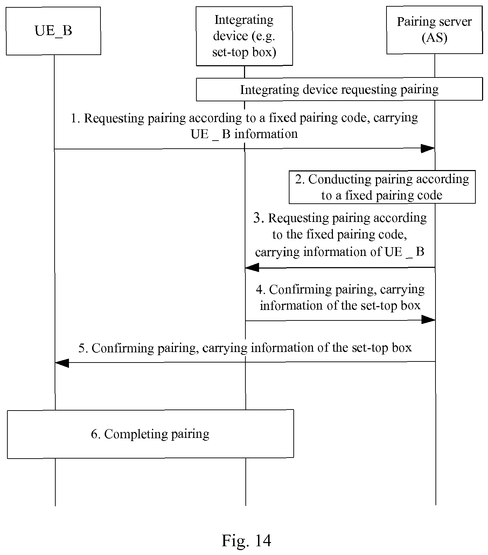

Fig. 14 is a schematic diagram of automatic pairing using a pairing server according to this embodiment; it is assumed that UE_B and the set-top box (integrating device) have previously established fixed pairing using steps 10-14 of Fig. 13, the specific implementation process is as follows.
(1) UE_B sends a pairing request to a server according to a fixed pairing code, the request carrying information of UE_B;
(2) the server finds the set-top box through pairing by the fixed pairing code;
(3) the server forwards the pairing message to the set-top box, carrying the information of UE_B;
(4) the set-top box returns a pairing confirmation, carrying information of the set-top box;
(5) the server forwards the pairing confirmation message to UE_B;
(6) automatic pairing is completed.

Here, all of the set-top boxes can be more general integrating devices, and the integrating devices may have sent a pairing request when the device is started.

It should be understood by those skilled in the art that embodiments of the present disclosure can be provided as a method, a system, or a computer program product. Accordingly, the present disclosure may take the form of a hardware embodiment, a software embodiment, or an embodiment in combination with aspects of software and hardware. Moreover, the present disclosure can take the form of a computer program product implemented on one or more computer-usable storage media (including but not limited to a magnetic disk memory, an optical memory, and the like) including computer usable program codes.

The present disclosure is described with reference to flowcharts and/or block diagrams of methods, devices (systems), and computer program products according to embodiments of the present disclosure. It should be understood that each flow and/or block in a flowchart and/or a block diagram, as well as the combination of the flow and/or block in the flowchart and/or the block diagram, can be implemented by computer program instructions. These computer program instructions can be provided to a processor of a general-purpose computer, a special-purpose computer, an embedded processor or other programmable data processing device to generate a machine such that the instructions executed by the processor of the computer or other programmable data processing device produce a device for implementing the functions specified in one or more flows of the flowchart and/or one or more blocks of the block diagram.

These computer program instructions may also be stored in a computer readable memory that can direct a computer or other programmable data processing device to operate in a specific manner, such that the instructions stored in the computer readable memory produce a manufacturing product including an instruction device, and the instruction device implements the functions specified in one or more flows of the flowchart and/or one or more blocks of the block diagram.

These computer program instructions can also be loaded onto a computer or other programmable data processing device, such that a series of operational steps are performed on the computer or other programmable device to produce computer-implemented processing, such that the instructions executed on the computer or other programmable device provide steps for implementing the functions specified in one or more flows of the flowchart and/or one or more blocks of the block diagram.

On this basis, the embodiments of the present disclosure further provide a computer readable storage medium, having stored thereon a computer program. When being executed by a processor, the computer program implements steps of any method on the integrating device side, or implements steps of any method on the pairing server side, or implements steps of any method on the first terminal side. Where, the computer program may be specifically executed by a processor of the above device to complete the steps of the above method.

The above descriptions are only preferred embodiments of the present disclosure, and are not intended to limit the protection scope of the present disclosure.

### Industrial applicability

According to the solutions provided by embodiments of the present disclosure, an integrating device receives a temporary pairing code sent by a pairing server. The temporary pairing code is used for pairing a first terminal with the pairing server. The integrating device receives pairing information of the first terminal returned by the pairing server, and after the pairing server sends pairing information of the integrating device to the first terminal, the integrating device completes a process of being paired with the first terminal. The embodiments of the present disclosure are not limited by near field communication, and the pairing process of the integrating device and the terminal can be completed based on the pairing server, so that the subsequent screen-throwing service can be carried out.

## Claims

1. A method for communications based on an integrating device, comprising:
receiving, by the integrating device, a temporary pairing code sent by a pairing server, wherein the temporary pairing code is used for pairing a first terminal with the pairing server; and
receiving, by the integrating device, pairing information of the first terminal returned by the pairing server.

2. The method according to claim 1, further comprising:
sending, by the integrating device, a second pairing request to the pairing server, after the pairing server sends pairing information of the integrating device to the first terminal, and the integrating device completes a process of being paired with the first terminal, wherein the second pairing request is used to request a fixed pairing code; and
receiving, by the integrating device, the fixed pairing code sent by the pairing server, after the pairing server interacts with the first terminal and stores the fixed pairing code.

3. The method according to claim 2, wherein after the integrating device receives the fixed pairing code sent by the pairing server, and when the pairing of the integrating device with the first terminal is currently in a release state, the method further comprises:
receiving, by the integrating device, a third pairing request sent by the pairing server, wherein the third pairing request is sent after the pairing server receives a pairing request based on the fixed pairing code, sent by the first terminal, and is used for requesting a pairing operation based on the fixed pairing code; and
returning, by the integrating device, a confirmation message carrying information of the integrating device to the pairing server, so that the pairing server sends a pairing confirmation message to the first terminal to complete a pairing process between the integrating device and the first terminal.

4. A method for communications based on an integrating device, comprising:
sending, by a pairing server, a temporary pairing code to the integrating device, after the pairing server receives a first pairing request sent by the integrating device after the integrating device is triggered, wherein the temporary pairing code is used for pairing a first terminal with the pairing server; and
sending, by the pairing server, pairing information of the first terminal to the integrating device, and sending, by the pairing server, pairing information of the integrating device to the first terminal.

5. The method according to claim 4, further comprising:
receiving, by the pairing server, a second pairing request sent by the integrating device, after the integrating device completes a process of being paired with the first terminal, wherein the second pairing request is used for requesting a fixed pairing code; and
enabling the pairing server to interact with the first terminal and store the fixed pairing code, and send the fixed pairing code to the integrating device.

6. The method according to claim 5, wherein after the pairing server sends the fixed pairing code to the integrating device, and when the pairing of the integrating device with the first terminal is currently in a release state, the method further comprises:
receiving, by the pairing server, a pairing request based on the fixed pairing code, sent by the first terminal;
sending, by the pairing server, a third pairing request to the integrating device, wherein the third pairing request is used for requesting a pairing operation based on the fixed pairing code; and
receiving, by the pairing server, a confirmation message returned by the integrating device and carrying information of the integrating device, and then sending, by the pairing server, a pairing confirmation message to the first terminal to complete a pairing process between the integrating device and the first terminal.

7. A method for communications based on an integrating device, comprising:
performing, by a first terminal, a signaling interaction with a second terminal after the first terminal completes pairing with the integrating device;
sending, by the first terminal, a session description protocol SDP request message to the integrating device, and receiving, by the first terminal, an SDP of the first terminal returned by the integrating device;
generating, by the first terminal, a new SDP based on the received SDP, and notifying, by the first terminal, according to a current service state, the second terminal of the new SDP through an update message corresponding to the service state;
requesting, by the first terminal, an SDP of the second terminal from the integrating device after the first terminal receives a response message from the second terminal, and receiving, by the first terminal, the SDP of the second terminal returned by the integrating device; and
performing, by the first terminal, an interaction of the SDP of the second terminal with the second terminal, to establish an audio channel and a video channel of the first terminal between the second terminal and the integrating device.

8. The method according to claim 7, wherein
when the current service state is a ringing state screen-throwing service, the update message is an UPDATE message; and
when the current service state is a call state screen-throwing service, the update message is a Re-INVITE message.

9. The method according to claim 7 or 8, wherein before the first terminal performs a signaling interaction with the second terminal, the method further comprises:
sending, by the first terminal, a capability query message to the integrating device;
receiving a response message returned by the integrating device, wherein the response message indicates that the integrating device only supports a video call; and correspondingly,
establishing, by the first terminal, a video channel of the first terminal between the second terminal and the integrating device, and establishing, by the first terminal, an audio channel of the first terminal between the first terminal and the second terminal.

10. A method for communications based on an integrating device, comprising:
completing, by the integrating device, pairing of the integrating device with a first terminal;
receiving, by the integrating device, a session description protocol SDP request message sent by the first terminal, after the first terminal and a second terminal complete a signaling interaction;
returning, by the integrating device, an SDP of the first terminal to the first terminal, for the first terminal to generate a new SDP based on the received SDP;
receiving, by the integrating device, a message sent by the first terminal requesting an SDP of the second terminal, after the first terminal notifies the second terminal of the new SDP through an update message corresponding to a current service state; and
returning, by the integrating device, the SDP of the second terminal to the first terminal, for the first terminal to perform an interaction of the SDP of the second terminal with the second terminal, so as to establish an audio channel and a video channel of the first terminal between the second terminal and the integrating device.

11. The method according to claim 10, wherein before the first terminal and the second terminal complete the signaling interaction, the method further comprises:
receiving, by the integrating device, a capability query message sent by the first terminal, and returning, by the integrating device, a response message to the first terminal, wherein the response message indicates that the integrating device only supports a video call; and correspondingly,
establishing a video channel of the first terminal between the second terminal and the integrating device, and establishing an audio channel of the first terminal between the first terminal and the second terminal.

12. An integrating device, comprising:
a first receiving unit, configured to
receive a temporary pairing code sent by a pairing server, wherein the temporary pairing code is used for pairing a first terminal with the pairing server; and
receive pairing information of the first terminal returned by the pairing server.

13. The integrating device according to claim 12, wherein the device further comprises: a first sending unit, configured to send, after the pairing server sends pairing information of the integrating device to the first terminal, and the integrating device completes a process of being paired with the first terminal, a second pairing request to the pairing server, wherein the second pairing request is used to request a fixed pairing code; and
the first receiving unit is further configured to receive, after the pairing server interacts with the first terminal and stores the fixed pairing code, the fixed pairing code sent by the pairing server.

14. The integrating device according to claim 13, wherein after the first receiving unit receives the fixed pairing code sent by the pairing server, and when the pairing of the integrating device with the first terminal is currently in a release state,
the first receiving unit is further configured to receive a third pairing request sent by the pairing server, wherein the third pairing request is sent after the pairing server receives a pairing request based on the fixed pairing code, sent by the first terminal, for requesting a pairing operation based on the fixed pairing code; and
the first sending unit is further configured to return a confirmation message carrying information of the integrating device to the pairing server, so that the pairing server sends a pairing confirmation message to the first terminal to complete a pairing process between the integrating device and the first terminal.

15. An application server, comprising:
a second receiving unit; and
a second sending unit, configured to
send, after the second receiving unit receives a first pairing request sent by an integrating device after the integrating device is triggered, a temporary pairing code to the integrating device, wherein the temporary pairing code is used for pairing a first terminal with the pairing server; and
send pairing information of the first terminal to the integrating device, and sending pairing information of the integrating device to the first terminal.

16. The application server according to claim 15, wherein
the second receiving unit is further configured to receive, after the integrating device completes a process of being paired with the first terminal, a second pairing request sent by the integrating device, wherein the second pairing request is used for requesting a fixed pairing code; and
the second sending unit is further configured to interact with the first terminal and store the fixed pairing code, and to send the fixed pairing code to the integrating device.

17. The application server according to claim 16, wherein after the second sending unit sends the fixed pairing code to the integrating device, and when the pairing of the integrating device with the first terminal is currently in a release state,
the second receiving unit is further configured to receive a pairing request based on the fixed pairing code, sent by the first terminal, to receive a confirmation message returned by the integrating device and carrying information of the integrating device, and then to send a pairing confirmation message to the first terminal, to complete a pairing process between the integrating device and the first terminal; and
the second sending unit is further configured to send a third pairing request to the integrating device, wherein the third pairing request is used for requesting a pairing operation based on the fixed pairing code.

18. A communication terminal based on an integrating device, comprising:
a communication unit, configured to perform a signaling interaction with a second terminal after completing pairing with the integrating device; to send a session description protocol SDP request message to the integrating device, and receive an SDP of the terminal returned by the integrating device; and to notify, according to a current service state, the second terminal of a new SDP forwarded by a processing unit through an update message corresponding to the service state; configured to request, after receiving a response message from the second terminal, an SDP of the second terminal from the integrating device, and receive the SDP of the second terminal returned by the integrating device; and configured to perform an interaction of the SDP of the second terminal with the second terminal, and establish an audio channel and a video channel of the terminal between the second terminal and the integrating device; and
a processing unit, configured to generate a new SDP based on the received SDP and forward the new SDP to the communication unit.

19. The terminal according to claim 18, wherein
the communication unit is further configured to send, before performing a signaling interaction with the second terminal, a capability query message to the integrating device, and to receive a response message returned by the integrating device, wherein the response message indicates that the integrating device only supports a video call; and correspondingly,
the communication unit is further configured to establish a video channel of the terminal between the second terminal and the integrating device, and establish an audio channel of the terminal between the terminal and the second terminal.

20. An integrating device, comprising:
a third sending unit, configured to return, after the integrating device completes pairing with a first terminal, an SDP of the first terminal to the first terminal, for the first terminal to generate a new SDP based on the received SDP; and further configured to return an SDP of the second terminal to the first terminal, for the first terminal to perform an interaction of the SDP of the second terminal with the second terminal, so as to establish an audio channel and a video channel of the first terminal between the second terminal and the integrating device; and
a third receiving unit, configured to receive, after the integrating device to complete pairing with the first terminal, an SDP request message sent by the first terminal after the first terminal and the second terminal complete a signaling interaction; and further configured to receive, after the first terminal notifies the second terminal of the new SDP through an update message corresponding to a current service state, a message sent by the first terminal requesting the SDP of the second terminal.

21. The integrating device according to claim 20, wherein
the third receiving unit is further configured to receive, before the first terminal and the second terminal complete a signaling interaction, a capability query message sent by the first terminal, and return a response message to the first terminal, wherein the response message indicates that the integrating device only supports a video call; and correspondingly,
a video channel of the first terminal is established between the second terminal and the integrating device, and an audio channel of the first terminal is established between the first terminal and the second terminal.

22. A storage medium, having stored thereon a computer program, wherein when being executed by a processor, the computer program implements steps of the method according to any of claims 1 to 3, or implements steps of the method according to any of claims 4 to 6, or implements steps of the method according to any of claims 7 to 9, or implements steps of the method according to any of claims 10 to 11.
